# EUROPEAN PATENT APPLICATION

(11) **EP 1 862 912 A1**
(43) Date of publication of application: **05.12.2007**
(21) Application number: 07252138.8
(22) Date of filing: 24.05.2007
(51) Int. Cl.: G06F 13/40

(54) **Connecting AC-coupled systems and DC-coupled systems**

(30) Priority: 31.05.2006 US 803566 P
(71) Applicant: Genesis Microchip, Inc., Santa Clara, CA 95054 (US)
(72) Inventor: Kobayashi, Osamu, Los Altos CA 94024-5809 (US); Prather, Lawrence A., Boulder Cree, CA 95006-0167 (US)
(74) Representative: Brown, George Laurence

(57) **Abstract**

Connecting an AC coupled source device to a DC coupled receiver device by way of a connector compatible with the DC coupled device includes generating a signal by the AC coupled source device, transmitting the signal by the AC coupled source device, receiving the signal at a converter unit coupled between the AC coupled source device and the connector, converting the signal to a converted signal suitable for reception by the DC coupled receiver device by the converter unit, passing the converted signal over the connector to the DC coupled receiver unit, and receiving the converted signal by the DC coupled receiver unit.

## Description

The invention relates to display devices. More specifically, the invention relates to digital display interface suitable for coupling connecting AC coupled video sources and/ or sinks to DC coupled video sink and/or source devices.

High-speed serial interfaces transfer data at rates in the range of one or more gigabits per second (Gbps), requiring considerable care in the design and layout of the circuit board and often requiring AC-coupling and differential signaling for reliable communications. In general, AC-coupled systems allow for the migration of semiconductor process to very deep sub-micron process and for at least this reason are anticipated to be very desirable for future technologies. In this regard, DC-coupled systems can be considered to be legacy systems. Therefore offering a seamless interface between the two systems will allows for the AC coupled system to leverage the advancement of the semiconductor technology while providing for the opportunity of backward interoperability with the legacy system.

Today's display interconnect landscape includes a number of DC coupled interfaces such as the VGA (analog) and DVI (digital) for desktop display interconnect applications as well as LVDS (digital) for internal connectivity applications within laptops and other all-in-one devices. Graphics IC vendors, display controller IC vendors, monitor manufacturers and PC OEMs as well as desktop PC consumers, to one degree or another, must factor interface choice into their design, product definition, manufacturing, marketing and purchase decisions. For example, if a consumer purchases a PC with an analog VGA interface then the consumer must either purchase an analog monitor or a digital monitor in which the analog video signal provided by the VGA interface has been digitized by way of an inline analog to digital converter (ADC) or an ADC built into the particular monitor.

Unfortunately, however, a VGA connector takes up a lot of real estate on a computer and was not designed for high-definition content since it can not handle high data rates. Even though the DVI interface supports high-definition television it does not allow for interactive communication between devices. Therefore, an AC coupled interface technology referred to as DisplayPort has been developed that addresses a number of the problems associated with currently available interconnects. For example, Display Port improves on low-voltage differential signal, or LVDS, designs as well as provides for higher serial data rates with transfer rate of 1.62 or 2.7 gigabits per second and video signal supports 8 or 10 bit pixel format per color channel. In order to become widely accepted, any AC coupled system (such as DisplayPort) must be able to adapt to legacy DC coupled connections such as DVI and HDMI (High Definition MultiMedia Interface).

Therefore, it would be desirable to provide a mechanism for connecting DC coupled systems and AC coupled systems in a simple, easy and cost effective manner.

A method of connecting an AC coupled source device to a DC coupled receiver device by way of a connector compatible with the DC coupled device includes generating a signal by the AC coupled source device, transmitting the signal by the AC coupled source device, receiving the signal at a converter unit coupled between the AC coupled source device and the connector, converting the signal to a converted signal suitable for reception by the DC coupled receiver device by the converter unit, passing the converted signal over the connector to the DC coupled receiver unit, and receiving the converted signal by the DC coupled receiver unit.

In another embodiment, an adapter unit for providing interoperability between an AC coupled device coupled to a DC coupled device by way of a connector is described. The adapter unit includes a sensor for determining if the device to which the adapter is connected is an AC coupled type device or a DC coupled type device. If the device to which the adapter unit is connected is an AC coupled device and a connector coupled thereto is compatible with a DC coupled device, then the adapter unit enables a signal conditioner. In the case where the AC coupled device is a transmitter unit, then the adapter unit conditions the signal in such a way that is compatible with the DC coupled device. For example, if the receiver is a DVI monitor, then the adapter conditions the incoming signal S to a conditioned signal S' having a TDMS voltage level consistent with the DVI monitor. In the case where the AC coupled device is a receiver unit and the connector is compatible with the DC coupled device, then the adapter unit converts a received signal to an AC compatible signal that is passed to the AC coupled receiver unit.

In still another embodiment of the invention, computer program product for connecting an AC coupled source device to a DC coupled receiver device by way of a connector compatible with the DC coupled device includes computer code for generating a signal by the AC coupled source device, transmitting the signal by the AC coupled source device, computer code for receiving the signal at a converter unit coupled between the AC coupled source device and the connector, computer code for converting the signal to a converted signal suitable for reception by the DC coupled receiver device by the converter unit, computer code for passing the converted signal over the connector to the DC coupled receiver unit, computer code for receiving the converted signal by the DC coupled receiver unit and computer readable medium for storing the computer code.

Embodiments of the invention will now be described by way of example with reference to the accompanying drawings, in which:
Fig. 1 shows a representative system in accordance with an embodiment of the invention.
Fig. 2 shows an implementation of the adapter used to connect a DC coupled transmitter to an AC coupled receiver unit.
Fig. 3 shows a voltage shift carried out by the adapter in accordance with an embodiment of the invention.
Figs. 4A and 4B show exemplary implementations of the adapter.
Fig. 5 shows a system suitable for implementing the invention.

Reference will now be made in detail to a particular embodiment of the invention an example of which is illustrated in the accompanying drawings. While the invention will be described in conjunction with the particular embodiment, it will be understood that it is not intended to limit the invention to the described embodiment. To the contrary, it is intended to cover alternatives, modifications, and equivalents as may be included within the spirit and scope of the invention as defined by the appended claims.

This invention describes an adapter unit that facilitates the interoperability of an AC-coupled system and a DC-coupled system while conforming to the electrical specification both systems. In particular, the adapter unit includes a sensor for determining if the device to which the adapter is connected is the AC coupled type device or the DC coupled type device and if the connector coupled thereto is compatible with the DC coupled device. The adapter also includes a signal conditioner unit connected to the sensor for shifting a signal voltage of a signal to a DC compatible signal voltage if the adapter unit receives the signal from the AC coupled device and for shifting the signal voltage of the signal to an AC coupled compatible signal if the adapter unit receives the signal from the DC coupled device.

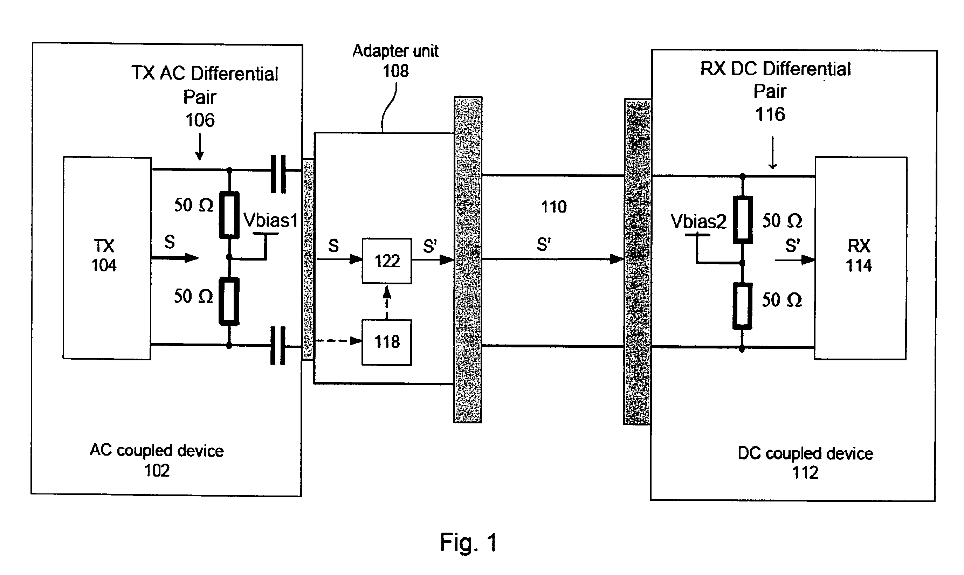

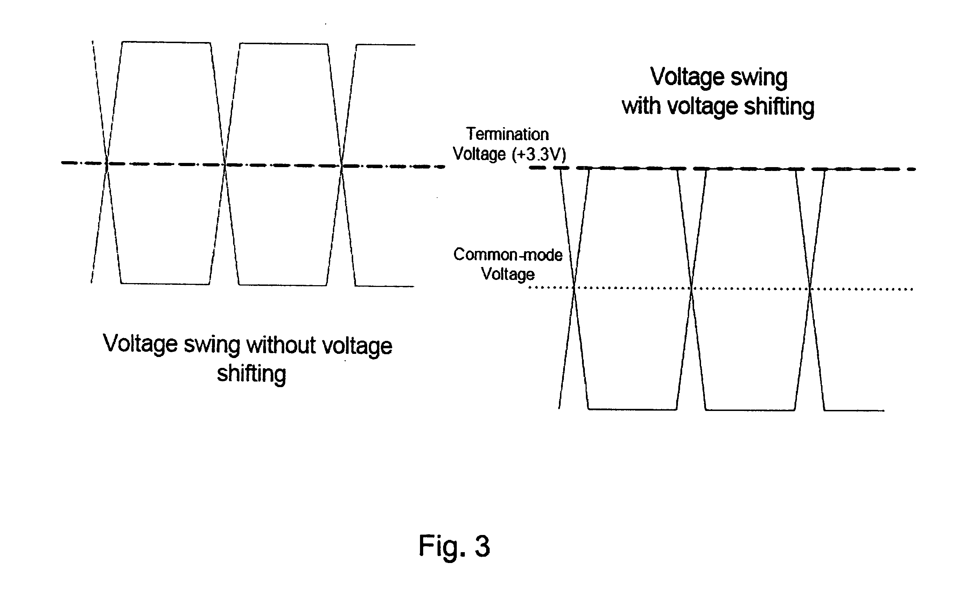

Fig. 1 shows a system 100 in accordance with an embodiment of the invention. The system 100 includes an AC coupled transmitter 102 that includes a transmitter unit 104 coupled by way of an AC differential pair 106 to an adapter unit 108. The adapter unit 108 is, in turn, coupled to a connector 110 compatible with a DC coupled receiver 112 connected thereto. The DC coupled receiver 112 includes a DC coupled receiver unit 114 coupled to the connector 110 by way of a DC differential pair 116. Prior to the transmission of a signal S from the transmitter unit 104, the adapter unit 108 senses the nature of the transmitter 102 (i.e., AC coupled or DC coupled) by way of a sensor 118. The sensor 118 provides a signal 120 to a signal conditioning unit 122 when the sensor 118 determines that the transmitter 102 is an AC coupled type device. In this situation, the signal conditioning unit 122 converts the signal S to a signal S' having a voltage level consistent with the electrical specification of the DC coupled receiver 112. For example, in the case that the connector 110 is a DVI cable and the receiver unit 112 is a DVI monitor and the video source 102 is a DisplayPort PC, then the adapter unit 108 shifts the voltage of the signal S to the signal S' having a TDMS voltage level consistent with the DVI monitor 112 (see Fig. 3). In this way, the adapter unit 108 provides for interoperability between AC coupled systems and DC coupled systems by allowing an end user to connect any form of display device (be it AC coupled or DC coupled) with any form of video source (be it AC coupled or DC coupled) using a standard DVI cable.

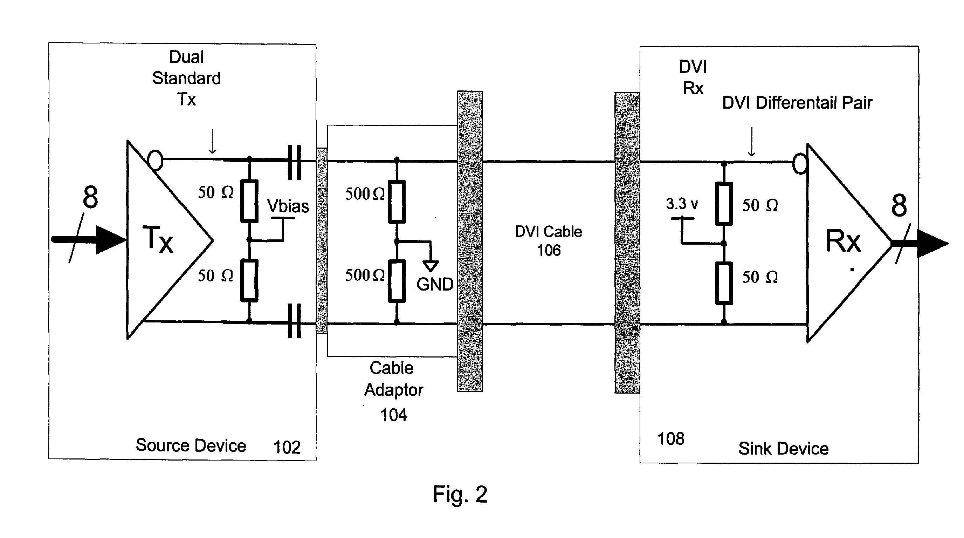

For example, Fig. 2 shows another implementation 200 of the adapter 108 used to connect a DC coupled transmitter 202 to an AC coupled receiver unit 204 coupled by way of the connector 110. As with the previous example, the adapter unit 108 conditions the signal S generated by a transmitter unit 206 to be consistent with the electrical specifications of the AC coupled receiver unit 208. Less costly than an active converter, the adaptor 108 can be used on both ends (Source and Sink) such that an end user of DVI device (PC or monitor) can use their existing DVI cable. Furthermore, in the DisplayPort mode, there is no performance degradation, no adaptor/voltage shifting and no CP transcoding required and most importantly from a consumer viewpoint, there is no need to change or alter receptacle/plug connections.

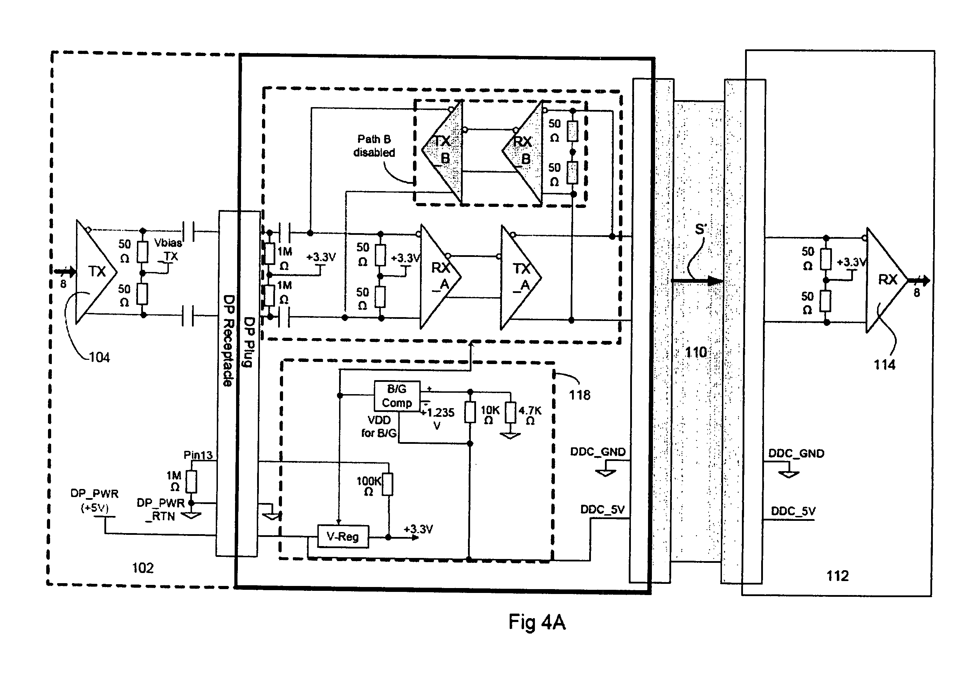

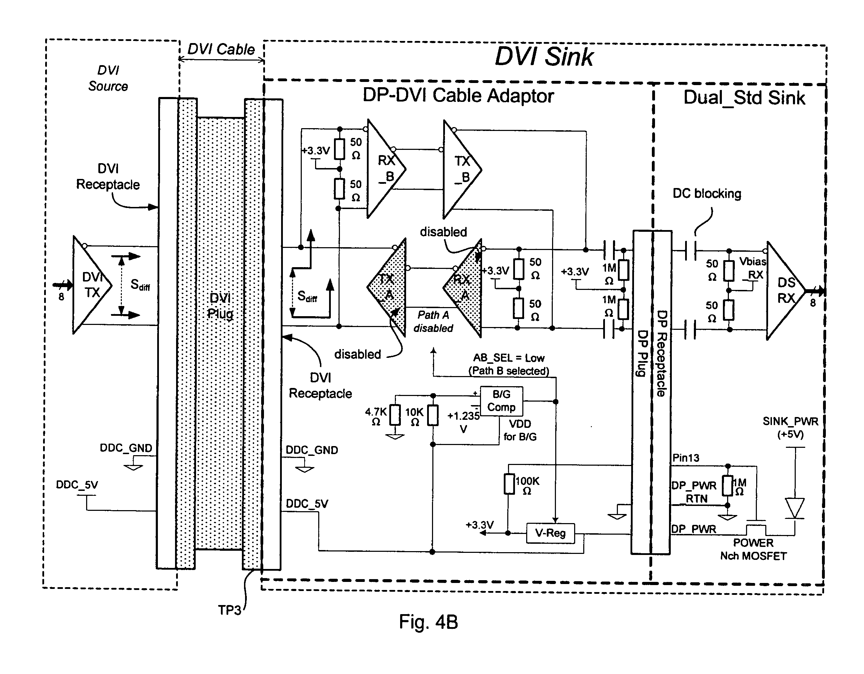

Figs. 4A and 4B show exemplary implementations of the adapter 108 in accordance with an embodiment of the invention.

It should be noted that in a particularly useful embodiment, the video source and/or video display is what is referred to as dual standard. By dual standard it is meant that the particular device (be it video source or video sink) can be configured in such as way as to be compatible with the DVI standard or the DisplayPort standard. In those situations where either or both of the video source and/or video sink are dual standard, then the inventive adapter unit has the capability of detecting the particular configuration of each and configuring itself accordingly.

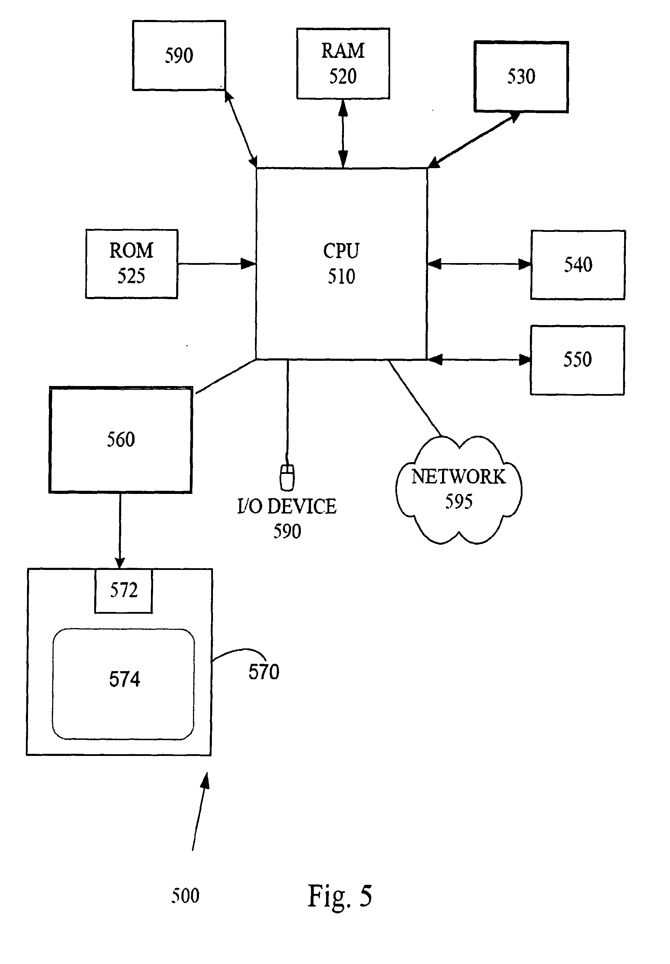

Fig. 5 illustrates a system 500 employed to implement the invention that is only an example of a system in which the present invention can be implemented. System 500 includes central processing unit (CPU) 510, random access memory (RAM) 520, read only memory (ROM) 525, one or more peripherals 530, graphics controller 560, primary storage devices 540 and 550, and digital display unit 570. As is well known in the art, ROM acts to transfer data and instructions uni-directionally to the CPUs 510, while RAM is used typically to transfer data and instructions in a bidirectional manner. CPUs 510 may generally include any number of processors. Both primary storage devices 540 and 550 may include any suitable computer-readable media. CPUs 510 are also coupled to one or more input/output devices 590 that may include, but are not limited to, devices such as video monitors, track balls, mice, keyboards, microphones, touch-sensitive displays, or other well-known input devices such as, of course, other computers. Finally, CPUs 510 optionally may be coupled to a computer or telecommunications network, e.g., an Internet network or an intranet network, using a network connection as shown generally at 595. With such a network connection, it is contemplated that the CPUs 510 might receive information from the network, or might output information to the network in the course of performing the above-described method steps. Such information, which is often represented as a sequence of instructions to be executed using CPUs 510, may be received from and outputted to the network, for example, in the form of a computer data signal embodied in a carrier wave. The above-described devices and materials will be familiar to those of skill in the computer hardware and software arts.

Graphics controller 560 generates image data and a corresponding reference signal, and provides both to digital display unit 570. The image data can be generated, for example, based on pixel data received from CPU 510 or from an external encode (not shown).

Although only a few embodiments of the present invention have been described, it should be understood that the present invention may be embodied in many other specific forms without departing from the the scope of the present invention. The present examples are to be considered as illustrative and not restrictive, and the invention is not to be limited to the details given herein, but may be modified within the scope of the appended claims along with their full scope of equivalents.

While this invention has been described in terms of a preferred embodiment, there are alterations, permutations, and equivalents that fall within the scope of this invention. It should also be noted that there are many alternative ways of implementing both the process and apparatus of the present invention. It is therefore intended that the invention be interpreted as including all such alterations, permutations, and equivalents as fall within the scope of the present invention, which is defined by the appended claims.

## Claims

1. A method of connecting an AC coupled source device to a DC coupled receiver device by way of a connector compatible with the DC coupled device, comprising:
generating a signal by the AC coupled source device;
transmitting the signal by the AC coupled source device;
receiving the signal at a converter unit coupled between the AC coupled source device and the connector;
converting the signal to a converted signal suitable for reception by the DC coupled receiver device by the converter unit;
passing the converted signal over the connector to the DC coupled receiver unit; and
receiving the converted signal by the DC coupled receiver unit.

2. An adapter unit for providing interoperability between an AC coupled device coupled to a DC coupled device by way of a connector, comprising:
a sensor for determining if the device to which the adapter is connected is an AC coupled type device or a DC coupled type device; and
a signal conditioner connected to the sensor unit arranged to condition a first signal to a conditioned second signal , wherein if the device to which the adapter unit is connected is an AC coupled transmitter and the connector is compatible with the DC coupled device, then the signal conditioner shifts the received signal voltage to converted signal voltage that is compatible with the DC coupled device, and wherein if the device is an AC coupled receiver unit and the connector is compatible with the DC coupled device, then the signal conditioner converts a signal received from the DC coupled transmitter to an AC compatible signal that is passed to the AC coupled receiver unit.

3. Computer program product executable by a processor for connecting an AC coupled source device to a DC coupled receiver device by way of a connector compatible with the DC coupled device, comprising:
computer code for generating a signal by the AC coupled source device;
computer code for transmitting the signal by the AC coupled source device;
computer code for receiving the signal at a converter unit coupled between the AC coupled source device and the connector;
computer code for converting the signal to a converted signal suitable for reception by the DC coupled receiver device by the converter unit;
computer code for passing the converted signal over the connector to the DC coupled receiver unit; and
computer code for receiving the converted signal by the DC coupled receiver unit; and
computer readable medium for storing the computer code.
